# EUROPEAN PATENT SPECIFICATION

(11) **EP 2 023 239 B1**
(45) Date of publication and mention of the grant of the patent: **09.03.2016**
(21) Application number: 07253309.4
(22) Date of filing: 21.08.2007
(51) Int. Cl.: G06F 9/26

(54) **Apparatus and method for fast one-to-many microcode patch**
Vorrichtung und Verfahren für ein oder mehrere schnelle Microcode-Patches
Appareil et procédé pour correspondance injective de timbres à microcode

(30) Priority: 24.07.2007 US 782072
(43) Date of publication of application: 11.02.2009
(73) Proprietor: VIA Technologies, Inc., Taipei 231 (TW)
(72) Inventor: Glenn, Henry G., Austin, Texas 78746 (US); Parks, Terry, Austin, Texas 78737 (US)
(74) Representative: Rees, Simon John Lewis

(56) References cited:
- EP-A- 0 066 084
- EP-A- 0 469 239
- US-A- 6 078 548
- WILKINSON M A: "BREAKPOINTS IN MASKED MICROCONTROLLERS TO FIC LATENT SOFTWARE DEFECTS" MOTOROLA TECHNICAL DEVELOPMENTS, MOTOROLA INC. SCHAUMBURG, ILLINOIS, US, vol. 26, 1 November 1995 (1995-11-01), page 2/03, XP000552115 ISSN: 0887-5286

## Description

### CROSS-REFERENCE TO RELATED APPLICATIONS

This application is related to the following co-pending U.S. Patent Applications, each of which has a common assignee and common inventors.

| SERIAL NUMBER | FILING DATE | TITLE |
|---|---|---|
| US20070782062 | 07/24/2007 | APPARATUS AND METHOD FOR REAL-TIME MICROCODE PATCH |
| US20070782081 | 07/24/2007 | APPARATUS AND METHOD FOR FAST MICROCODE PATCH FROM MEMORY |
| US20070782088 | 07/24/2007 | MICROCODE PATCH EXPANSION MECHANISM |
| US20070782094 | 07/24/2007 | ON-CHIP MEMORY PROVIDING FOR MICROCODE PATCH OVERLAY AND CONSTANT UPDATE FUNCTIONS |
| US20070782099 | 07/24/2007 | MECHANISM FOR IMPLEMENTING A MICROCODE PATCH DUIRNG FABRICATION |
| US20070782105 | 07/24/2007 | CONFIGURABLE FUSE MECHANISM FOR IMPLEMENTING MICROCODE PATCHES |

### BACKGROUND OF THE INVENTION

### FIELD OF THE INVENTION

This invention relates in general to the field of microelectronics, and more particularly to an apparatus and method for performing microcode patches in a microprocessor.

### DESCRIPTION OF THE RELATED ART

Present day microprocessors are designed to execute many instructions per clock cycle and provide many features to maximize the number of instructions that are executed during any given clock cycle. A clock cycle is generally considered to be that interval of time which is allocated for each of the pipeline stages in the microprocessor to perform the processing work that is required in order to forward results to the next pipeline stage. And present day microprocessors comprise many pipeline stages, a number of which are configured in parallel, to allow for simultaneous, or concurrent processing tasks, thus enabling multiple instructions to be executed in parallel. A core clock signal is provided to each of the pipeline stages in order to synchronize instruction execution in each of the stages. The core clock signal is often a multiple in frequency of a bus clock signal which is provided from an external clock generator circuit.

As one skilled in the art will appreciate, the major stages of a present day pipeline microprocessor may be divided into those associated with fetching instructions (i.e., fetch stage logic) from memory, translating the instructions (i.e., translate stage logic) into associated sequences of micro instructions that are unique to (i.e., "native to") the specific microprocessor, executing (i.e., execution stage logic) the associated sequences of micro instructions, and writing (e.g., write back stage logic) the results of the executions to designated locations.

The aforementioned fetch and translate stages are described within the context of a present day complex instruction set computer (CISC) that employs macro instructions, such as are exhibited by the ubiquitous x86 instruction set architecture (ISA). A single macro instruction is employed to specify a number of lower-level hardware operations, and thus it is well understood in the art that a macro instruction which has been fetched from memory (e.g., external system memory or cache memory) must first be converted into a corresponding sequence of micro instructions (also known as "native instructions") that each specify one or more of the lower-level operations. Following this conversion, the micro instructions are dispatched to various execution stage units for execution, often in parallel, whereby results are generated or the specified lower-level operations are performed.

Consequently, significant attention in the art has been devoted to developing very fast and efficient mechanisms for converting macro instructions into associated micro instruction sequences and for optimally dispatching micro instructions to execution stage resources. A number of different approaches exist for performing the conversion operations, but most of the approaches typically can be characterized by a combination of direct conversion (i.e., "translation") by hardware and indexed storage in a read-only memory (ROM). Direct translation resources are often referred to as translators, decoders, translate logic, and the like, and indexed storage resources are referred to as microcode ROM or micro instruction ROM.

For example, a given macro instruction that specifies a very simple operation may only undergo direct translation by a translator, and will be converted into perhaps one or two associated micro instructions, while another macro instruction that specifies a very complex operation (e.g., a trigonometric function) may be translated into a single micro instruction that specifies an address in the microcode ROM (i.e., a "microcode ROM entry point") where a sequence consisting of hundreds of sequential micro instructions is stored, and where each of the micro instructions in the sequence prescribes a lower-level operation that is required to perform the complex operation.

As one skilled in the art will appreciate, it is the complex sequences of micro instructions that are stored in the microcode ROM which are more prone to error. As new microprocessors are designed and fabricated, it is incumbent upon system architects to provide techniques that allow these errors to be detected and corrected in a manner that minimizes the overall impact of the change. Techniques for detecting these errors prior to placing a part into mass production would perhaps sacrifice instruction throughput and speed of a given part for a wide degree of flexibility in the lab or debug environment. For example, it is often advantageous to provide mechanisms for simulating and testing the effects of microcode changes in the lab on a new design prior to committing these changes to silicon. Alternatively, correction of microcode errors in a fabricated part would seek to prioritize the speed and throughput of the part over flexibility in terms of options provided for making the corrections. In addition, if microcode errors are detected following shipment of parts, it is also desirable to provide techniques for distributing the corrections to end users in a way that the end users can implement the corrections in the field. Such corrections are commonly called patches, microcode patches, field ECs (i.e., "engineering change"), and other like terms.

A desirable approach for effecting microcode patches is to simply substitute, or replace, a given microcode instruction with one or more substitute microcode instructions. Accordingly, when the given microcode instruction is accessed in the microcode ROM, it is detected and its corresponding replacement microcode instructions are then substituted therefor. In theory, this approach is straightforward. But in practice, providing mechanisms for microcode patches is very complex because of a requirement that the throughput of a part not be disadvantageously affected in its operating environment.

In U.S. Patent 6,438,664, McGrath et al. discuss the advantages and disadvantages of numerous microcode patch approaches to include fetching the replacement microcode from external memory at the instant when the offending microcode is encountered and fetching it prior to encountering the offending microcode. When fetched prior to encountering the offending microcode, the replacement microcode is stored in a volatile location and is substituted for the offending microcode when required. McGrath et al. additionally provide an amount of random access memory (RAM) in a processor for implementing microcode patches. The RAM is loaded with patches from external memory during operation of the processor and when a microcode line is accessed from the microcode ROM for which a patch is enabled, the patch is then fetched from the RAM and is executed instead of the microcode line. McGrath teaches several match registers within which are stored microcode ROM addresses which have associated patches in RAM. When a matching address is found, control is then passed to the RAM for substitution. McGrath et al. further note that while this approach is advantageous, it is also limiting in that switching control from the microcode ROM to the RAM causes a two-cycle bubble in the pipeline. That is, microcode patches according to the technique disclosed by McGrath et al. are provided at the cost of performance and throughput.

Consequently, it is desirable to provide an apparatus and method for executing a microcode patch that does not introduce delay into the pipeline stages of a microprocessor. It is furthermore desirable to provide a mechanism for performing real-time microcode substitutions where a replacement micro instruction is substituted for a micro instruction in microcode ROM without impacting performance of the microprocessor.

It is also desirable to provide a technique for implementing microcode patches that replace a single microcode ROM instruction with more than one substitute micro instruction, that is, a one-to-many microcode patch, where no additional delay is introduced as a result of accessing the microcode patch.

It is furthermore desirable to provide a flexible mechanism for accessing microcode patches which are stored in external memory that minimizes the impact to the microprocessor design for accessing the patches, and that allows for interlacing of macro and micro instructions in the substitute code. Such a mechanism would be very advantageous for use during debug of a microprocessor design and for simulation of proposed microcode routines corresponding to complex operations.

Additionally, it is desirable to provide a technique for loading microcode patches into a microprocessor from an external source that does not require execution of instructions by the microprocessor.
EP 0469239 discloses an apparatus for correcting a faulty microcode contained in a control store of a microprogrammed processor. The apparatus comprises a detection circuit which operates as a logic NOR circuit and is utilized to detect valid operational codes of macroinstructions that correspond to microcode sequences that contain errors or faults.
EP 0066084 discloses a microinstruction control storage mechanism in which an array of single-bit storage devices, accessed by microinstructions from a read-only store, signals the existence of a faulty microinstruction from the read-only store.

### SUMMARY OF THE INVENTION

The present invention, among other applications, is directed to solving the above-noted problems and addresses other problems, disadvantages, and limitations of the prior art. The present invention provides a superior technique for performing microcode patches which is both fast and flexible. In one embodiment, an apparatus for performing a real-time microcode patch is provided. The apparatus includes a microcode ROM address bus, a patch array, a mux, and a RAM. The microcode ROM address bus is configured to provide a microcode ROM address of a location in a microcode ROM, the microcode ROM address indexing a micro instruction sequence that corresponds to a macro instruction. The patch array receives a microcode ROM address and determines that the microcode ROM address matches one of a plurality of entries within the patch array. When the microcode ROM address matches, the patch array outputs a corresponding branch instruction and asserts a hit signal. The branch instruction prescribes a microcode branch target address. The mux receives the branch instruction from the patch array and a micro instruction corresponding to the microcode ROM address from a microcode ROM. The mux provides the micro instruction or the corresponding branch instruction to an instruction register based upon the state of the hit signal. The RAM stores a plurality of patch instructions that are to be executed in place of the micro instruction. The first one of the plurality of patch instructions is stored at a location in the RAM corresponding to the microcode branch target address.

Another aspect of the present invention comprehends a method for performing a one-to-many microcode patch corresponding to a micro instruction stored in microcode ROM. The method includes: within a translate stage of a microprocessor, concurrently providing a microcode ROM address to a microcode ROM and to a patch array, the microcode ROM address indexing a micro instruction sequence stored in a microcode ROM that corresponds to a macro instruction; determining that the microcode ROM address matches one of a plurality of entries within the patch array, outputting a corresponding branch instruction, and asserting a hit signal, where the branch instruction prescribes a branch target address; responsive to assertion of the hit signal, routing the corresponding branch instruction to an instruction register for execution; branching to a location in a microcode RAM that corresponds to the branch target address, and subsequently executing one or more patch instructions which are stored at the location in the microcode RAM.

### BRIEF DESCRIPTION OF THE DRAWINGS

These and other objects, features, and advantages of the present invention will become better understood with regard to the following description, and accompanying drawings where:
FIGURE 1 is a block diagram illustrating a prior art mechanism for implementing microcode patches in a microprocessor;
FIGURE 2 is a block diagram showing details of a translate stage in a microprocessor according to the present invention;
FIGURE 3 is a block diagram depicting a real-time microcode patch apparatus according to the present invention;
FIGURE 4 is a flow chart featuring a method according to the present invention for making real-time microcode patches;
FIGURE 5 is a block diagram showing an apparatus according to the present invention for performing a one-to-many microcode patch;
FIGURE 6 is a flow chart illustrating a method for performing a one-to-many microcode patch according to the present invention;
FIGURE 7 is a block diagram detailing an apparatus according to the present invention for performing a microcode patch from memory;
FIGURE 8 is a diagram illustrating an exemplary wrapper instruction format and
FIGURE 9 is a diagram showing an example of translator bypass code according to the present invention.

### DETAILED DESCRIPTION

The following description is presented to enable one of ordinary skill in the art to make and use the present invention as provided within the context of a particular application and its requirements. Various modifications to the preferred embodiment will, however, be apparent to one skilled in the art, and the general principles defined herein may be applied to other embodiments. Therefore, the present invention is not intended to be limited to the particular embodiments shown and described herein, but is to be accorded the widest scope consistent with the principles and novel features herein disclosed.

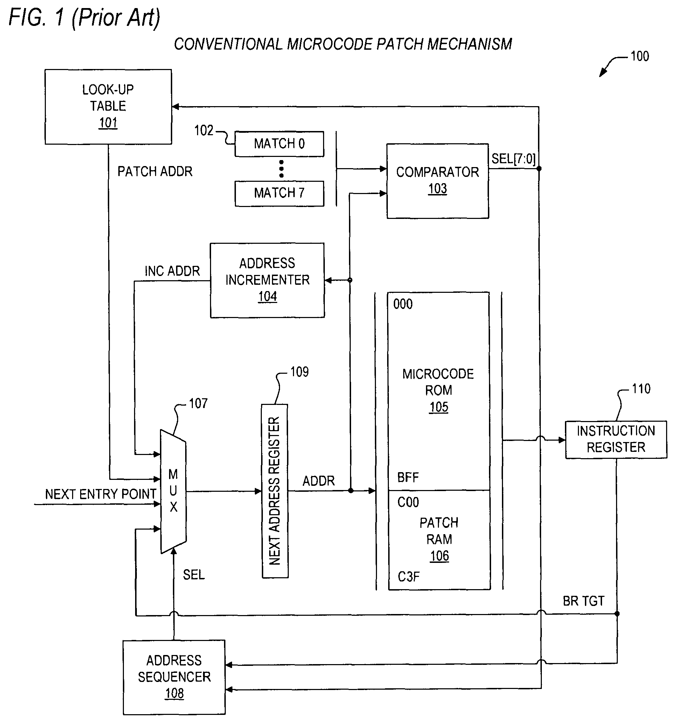

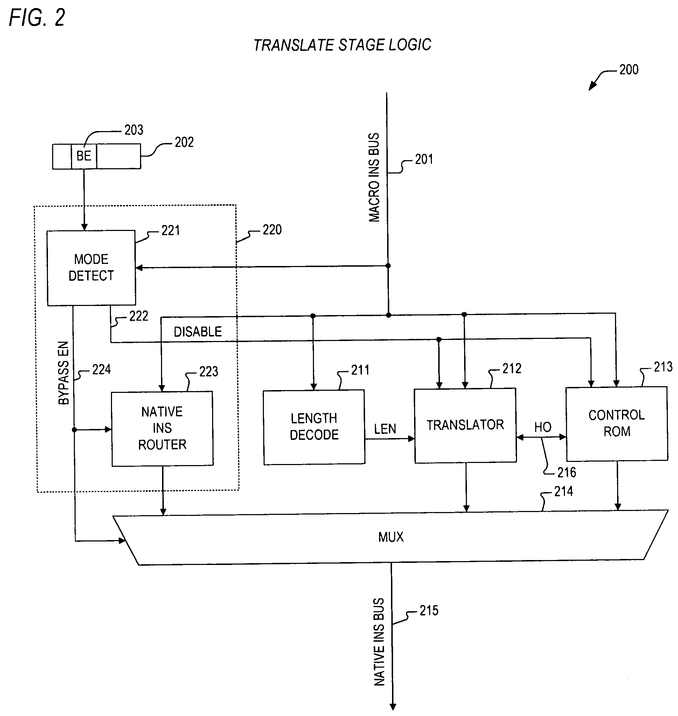

In view of the above background discussion on mechanisms for making microcode patches within a present day microprocessor, a discussion highlighting the limitations of these mechanisms will be provided with reference to FIGURE 1. Following this, a discussion of the present invention will be presented with reference to FIGURES 2-9. The present invention provides a flexible and efficient technique for programming and implementing patches to microcode ROM in a microprocessor. The invention is flexible with regard to the environment in which patches are to be executed, and the mechanism for implementing the patches is significantly faster than that which has heretofore been provided.

Turning to FIGURE 1, a block diagram is presented illustrating a prior art mechanism 100 for implementing microcode patches in a microprocessor. The block diagram depicts a conventional microcode patch mechanism 100 such as might be provided within the translate stage of a present day microprocessor. The mechanism 100 includes a microcode ROM 105 that is coupled to a patch RAM 106. For purposes of discussion, the RAM 106 is configured to store replacement micro instructions within the upper 64 locations of a microcode storage address space ranging from address 0x000 through 0xC3F. Hence, the upper 64 locations of the microcode address space are configured as RAM 106 as opposed to ROM 105. The microcode address space 0x000-0xC3F is accessed by a microcode address bus ADDR and the ROM 105 and RAM 106 output indexed micro instruction sequences to an instruction register 110. The instruction register 110 provides micro instructions to subsequent stages (not shown) in the microprocessor for execution.

The address bus ADDR receive a microcode address from a next address register 109, whose input is coupled to the output of a mux 107. One of four mux inputs are selected as the mux output. The mux inputs are an incremented address that is generated by an address incrementer 104, a next entry point address, a branch target address, and a patch address. The address incrementer 104 increments a previous microcode address provided on bus ADDR to enable indexing of a micro instruction in a next sequential microcode address location, such as may be employed in sequences of micro instructions. The branch target address is provided from a branch target field of the instruction currently in the instruction register 110 to enable branches in microcode ROM 105 to be performed. The next entry point is the location in microcode ROM 105 containing micro instructions corresponding to a following micro instruction sequence. And the patch address is the location in microcode RAM 106 of a substitute micro instruction to replace an existing micro instruction stored in microcode ROM 105. An address sequencer 108 is coupled to the instruction register 110 and generates a select bus value which directs the mux 107 to select one of its four inputs. The address sequencer 108 determines what type of micro instruction is in the instruction register 110. If the micro instruction has a following micro instruction stored in microcode ROM 105 or RAM 106, then SEL is configured to direct the mux 107 to select the incremented address input. If the micro instruction is a branch instruction, then SEL is configured to direct the mux 107 to provide the branch target address to the next address register 109. If the micro instruction is the last micro instruction in a micro instruction sequence, then the address sequencer 108 directs the mux 107 via SEL to provide the next entry point address to the next address register. Typically, the next entry point address is generated by a direct translator (not shown) that has translated a following macro instruction. For clarity, interaction with the translator is not depicted.

The mechanism 100 also depicts eight match registers 102, each of which is coupled to a comparator 103. In addition, the comparator 103 receives the microcode address ADDR which is provided from the next address register 108. The comparator 103 outputs a select bus SEL[7:0] that selects one of eight entries in a look-up table 101 and which is also coupled to the address sequencer 108 to indicate that a microcode address has been detected for which a patch is implemented. Each of the eight entries in the look-up table 101 is a microcode patch address provided on bus PATCH ADDR as an input to the mux 107.

The configuration is FIGURE 1 is typical of the mechanisms presently available for performing microcode patches, and is substantially similar to the configuration disclosed in U.S. Patent 6,438,664. In operation, a microcode sequence within the ROM 105 is configured to load the match registers 102, the lookup table 101, and the patch ROM 106 from external memory (not shown) via instructions contained in the basic input/output system (BIOS) or which are executed by the operating system following power-up or reset of the processor. Consequently, when the next microcode address on bus ADDR matches the contents of one of the loaded match registers 102, then the comparator 103 sets SEL[7:0] to (1) select the corresponding patch address in the lookup table 101, and to (2) indicate to the address sequencer 108 that the current contents of the next address register 109 (i.e., the offending microcode address) are to be replaced by the patch address provided by the look-up table 101. Accordingly, the address sequencer 108 changes the value of SEL to select the patch address for input to the next instruction register 109, and thus the patch address is provided from the next instruction register 109, thus indexing the entry point in the patch RAM 106 for the replacement micro instructions, which are subsequently output to the instruction register 110.

The configuration of FIGURE 1 is useful for implementing microcode patches via field ECs and is easily loaded through instructions executed in BIOS or in the operating system itself by any of the known techniques. But as McGrath et al. note, and as the present inventors have likewise observed, any time a micro instruction substitution must occur (i.e., when the comparator 103 indicates a match), the address currently output from the next address register must be replaced with a patch address fetched from the look-up table 101, prior to accessing the corresponding microcode instruction. McGrath et al. note that this introduces a two-cycle delay into the pipeline. And the present inventors have observed that such a delay is not acceptable under most operating conditions, and when viewed from a performance perspective, the introduction of any delay into the pipeline is highly disadvantageous. Thus, present day microcode patch techniques are limiting in that they throttle performance.

The present invention overcomes the above noted limitations by providing a microcode patch apparatus and method that does not introduce any additional pipeline delay as a result of accessing the patch, thus enabling one-to-one and one-to-many patches to be implemented without impacting processor throughput. The present invention also provides a flexible mechanism for implementing patches which can be tailored to provide for pure performance at the expense of flexibility, slight performance impact with greater flexibility, or maximum flexibility for purposes of simulation and debug. The present invention will now be discussed with reference to FIGURES 2-9.

Turning now to FIGURE 2, a block diagram is presented showing details of a translate stage 200 in a microprocessor according to the present invention. The translate stage 200 is configured to support one-to-one microcode patch operations, one-to-many patch operations, and is also flexible to provide for the fetching and execution of micro instructions which are stored in system memory. In accordance with the present invention, a one-to-one microcode patch operation is an operation where the contents of a single microcode ROM location are replaced. For example, replacement of a 38-bit microcode ROM output retrieved from microcode ROM address 0x001E with a 38-bit substitute is considered to be a one-to-one microcode patch, regardless of whether the 38-bit output is an explicit micro instruction, concatenated micro instructions, or an encoding of a plurality of micro instructions. Likewise, a one-to-many microcode patch operation is where the contents of a single microcode ROM location are replaced with more than one substitute. In the example above, replacing the 38-bit microcode ROM output with, say, three 38-bit substitutes is considered to be a one-to-many microcode patch. The translate stage 200 includes a macro instruction bus 201 that distributes instructions fetched by fetch stage logic (not shown) from system memory (not shown).

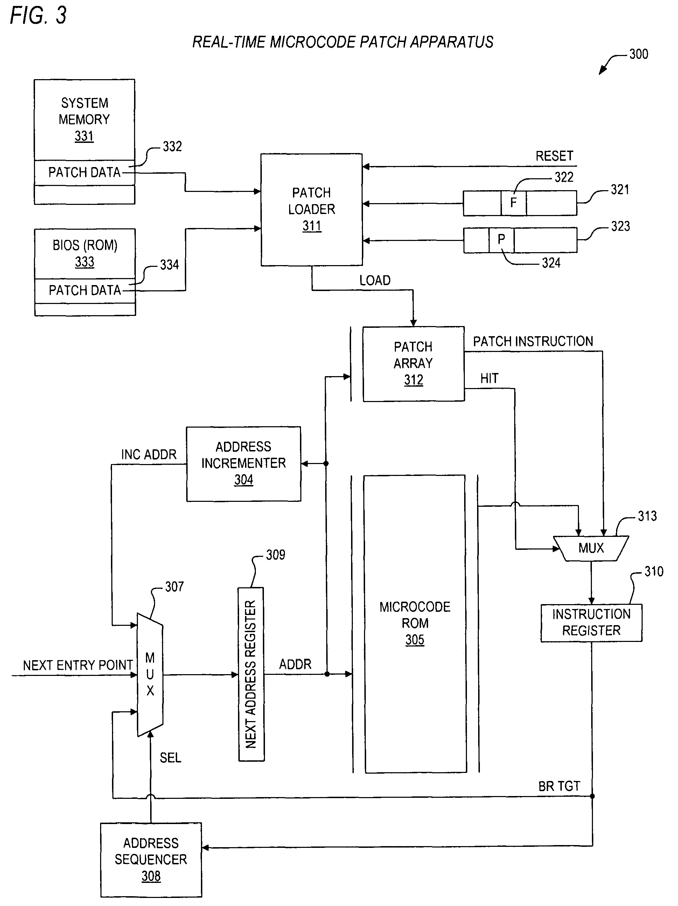

The macro instructions are distributed to bypass logic 220, an instruction length decoder 211, a translator 212, and a control ROM 213. The control ROM 213 includes provisions for indexing and sequencing micro instructions from an internal microcode ROM as described above, and for performing one-to-one and one-to-many microcode patches in real time, as will be described in more detail below with reference to FIGURES 3-7. Within the bypass logic 220, macro instructions are provided to mode detection logic 221 and to a native instruction router 223. The mode detector 221 provides two signals comprising a bypass signal group, BYPASS EN 224 and DISABLE 222. DISABLE 222 is routed to the length decoder 211, the translator 212, and the control ROM 213. BYPASS EN 224 is provided as a control signal to a mux 214. Micro instruction outputs from the native instruction router 223, the translator 212, and the control ROM 213 are provided as inputs to the mux 214. The mux 214 is controlled by BYPASS EN 224 to allow either all three micro instruction inputs to propagate to a native instruction bus 215 or to disable the output of the native instruction router 223 from propagating through to the native bus 215. To preclude contention, the native instruction router 223, translator 212, and control ROM 213 are controlled via the DISABLE signal 222 and signal HO 216 to exclusively present only one micro instruction input to the mux 214 at any given time.

The translation stage 200 according to the present invention is configured to perform the functions and operations as described above. The translation stage 200 comprises digital logic, analog logic, circuits, devices, or machine specific instructions, or a combination of digital logic, analog logic, circuits, devices, or machine specific instructions, or equivalent elements that are employed to perform the aforementioned functions and operations according to the present invention. The elements employed to perform the functions and operations within the translation stage 200 may be shared with other circuits, microcode, etc., that are employed to perform other functions and operations within the microprocessor. According to the scope of the present application, machine specific instructions is a term employed to refer to one or more machine specific instructions. A machine specific instruction is an instruction at the level that a unit executes. For example, machine specific instructions are directly executed by a reduced instruction set computer (RISC) microprocessor. For a complex instruction set computer (CISC) microprocessor such as an x86-compatible microprocessor, x86 instructions are translated into associated machine specific instructions, and the associated machine specific instructions are directly executed by a unit or units within the CISC microprocessor.

In a normal operating mode, macro instructions from an application program are fetched from external memory by the fetch stage and are provided over the macro instruction bus 201. Because macro instructions typically do not conform to a fixed length standard, the length decoder 211 evaluates the byte stream over the bus 201 to determine the length in bytes of each macro instruction. In one embodiment, the length in bytes of each macro instruction is provided to the translator 212 via a length bus LEN. The translator 212 accordingly retrieves the number of indicated bytes from the macro instruction bus 201. If a retrieved macro instruction is to be directly translated by the translator 212, then the translator 212 performs the translation of the macro instruction into associated native instructions. The native instructions are then provided from the translator 212 to the mux 214. If the retrieved macro instruction is to be decoded by the control ROM 413, then the translator 212 generates a corresponding microcode ROM entry point address and directs the control ROM 213 to retrieve the micro instructions from the microcode ROM therein by providing the entry point address to the control ROM 213 via a handoff bus HO. The control ROM 213 subsequently fetches the corresponding micro instructions from its internal microcode ROM and provides these micro instructions to the mux 214. Hence, in normal operating mode, the translator 212 or the control ROM 213 sources micro instructions to the native instruction bus 215 via the mux 214.

In one embodiment, the translate stage logic 200 is configured to access a machine specific register 202 that includes a bypass mode enable BE bit 203. The machine specific register 202 is not architecturally visible to the application programmer, but can be written through special procedures via an encrypted interface. For purposes of this application, it is sufficient to note that asserting the BE bit 203 places the microprocessor in a translator bypass mode and deasserting the BE bit 203 restores the microprocessor to normal operating mode.

During normal operation, a mode detector 221 within the bypass logic 220 monitors the state of the BE bit 203 and instructions appearing over the bus 201. If the BE bit 203 is asserted, then the mode detector 221 asserts BYPASS EN 224, thus enabling native instructions to be routed from the native instruction router 223 through the mux 214 to the native instruction bus 215 as well as native instructions which are provided by the translator 212 and control ROM 213. In one embodiment, DISABLE 222 inhibits the translator 212 and the control ROM 213 from performing instruction translation functions for a corresponding macro instruction that is fetched from the macro instruction bus 201. Consequently, when the translation stage 200 is operating in normal operating mode (i.e., the BE bit 203 is deasserted), the bypass logic 220 deasserts the bypass enable signal 224, thus disabling the native instruction router 223, and directing the mux 214 to select native instructions from either the translator 212 or the control ROM 213 for execution. When the translation stage 200 is placed in bypass mode (i.e., the BE bit 203 is asserted), then the bypass logic 220 asserts the bypass enable signal 224, thus enabling the native instruction router 223 and the mode detector 221.

In bypass mode, the mode detector controls the state of DISABLE 222. When DISABLE is deasserted, then the native instruction router 223 is disabled and the translator 212, and control ROM 213 operate as in normal mode. Macro instructions are fetched from the macro instruction bus 201 and are translated or retrieved by the control ROM 213. In this mode, however, a programmer may interlace native instructions within a macro instruction flow stored in memory by encapsulating the native instructions in a special "wrapper" macro instruction which is detected by the mode detector 221. In one example the wrapper macro instruction is an unused or invalid macro instruction which would otherwise cause an exception. Advantageously then, a debugger may place the microprocessor according to the present invention into a native bypass mode by setting the BE bit 203, but may continue to use all the macro instructions within the particular ISA. And to support debug or simulation functions, the programmer may employ the wrapper macro instruction to embed a native instruction therein, thus enabling programmable access to native resources which would not otherwise be made available. For instance, many native resources (e.g., temporary storage registers, counters, state indicators, etc.) within a microprocessor according to the present invention are employed during the execution of macro instructions, but are not accessible. Yet when the microprocessor is in bypass mode, the native instructions that provide access to these native resources may be interlaced among the macro instructions via use of the wrapper instruction.

In bypass mode, the mode detector 221 monitors instructions retrieved from the macro instruction bus 201. When a wrapper instruction is detected, the mode detector asserts DISABLE, thus enabling the native instruction router 223 and disabling the translator 212 and control ROM 213. When enabled, the native instruction router 223 strips the native instruction from within the wrapper macro instruction and routes the native instruction to the mux 214, and thus to the native instruction bus 215. In one example all native instructions are of a fixed number of bits. In a specific example native instructions are 38 bits. In one example the native instructions provided via the wrapper instruction, and those provided via the translator 212 and control ROM 213 as well, comprise an encoding of one or more machine specific instructions, which are subsequently translated into the one or more machine specific instructions by a machine specific translator ("microtranslator"), that is coupled to the native instruction bus 215. The machine specific instructions are provided by the microtranslator (not shown) to subsequent pipeline stages for execution. A more traditional example contemplates native instructions provided via the wrapper instruction, translator 212, and control ROM 213 which are directly provided to subsequent pipeline stages for execution.

Now turning to FIGURE 3, a block diagram is presented depicting a real-time microcode patch apparatus 300 according to the present invention. The patch apparatus 300 may be embodied within control ROM logic operating in either normal or native bypass mode, such as the control ROM 213 shown in FIGURE 2. The real-time microcode patch apparatus 300 is configured to perform one-to-one microcode patch operations in the same number of clock cycles that are normally required to fetch micro instructions. That is, the present invention is configured to perform a one-to-one microcode patch without introducing any additional delay into a microprocessor pipeline.

The one-to-one patch apparatus 300 includes a microcode ROM 305. In one example the microcode ROM has 20,480 (0x5000) 38-bit entries, and is disposed within a 32K-location microcode address space. Other examples are also contemplated. The microcode address space is accessed by a microcode address bus ADDR and the microcode ROM 305 provides micro instruction sequences as indexed by the value of ADDR to a mux 313. The output of the mux 313 is coupled to an instruction register 310. The instruction register 310 provides micro instructions to subsequent stages (not shown) in the microprocessor for execution. In one example the micro instructions are a plurality of machine specific instructions which have been encoded into a 38-bit entity. In this example contents of the instruction register 310 are provided to a microtranslator (not shown) for decoding of the encoded entities into machine specific instruction and for dispatch of the machine specific instructions to functional units in the pipeline.

The address bus ADDR receives a microcode address from a next address register 309, whose input is coupled to the output of a mux 307. One of three mux inputs are selected as the mux output. The mux inputs are an incremented address INC ADDR that is generated by an address incrementer 304, a next entry point address NEXT ENTRY POINT, and a branch target address BR TGT. The address incrementer 304 increments a previous microcode ROM address provided on bus ADDR to enable indexing of a micro instruction in a next sequential microcode address location, such as may be employed in sequences of micro instructions. The branch target address is provided from a branch target field of a micro instruction currently in the instruction register 310 to enable branches in microcode ROM 305 to be performed. These types of branches are also referred to as microcode branches. The next entry point is the location in the microcode ROM 305 containing micro instructions corresponding to a following micro instruction sequence such as may be associated with a next macro instruction. In one example the next entry point is provided to the patch apparatus via a handoff bus from a translator according to the present invention, such as the translator 212 and handoff bus 216 discussed above with reference to FIGURE 2. An address sequencer 308 is coupled to the instruction register 310 and generates a value on bus SEL which directs the mux 307 to select one of its three inputs. The address sequencer 308 determines what type of micro instruction is in the instruction register 310. That is, if the micro instruction has a following micro instruction stored in microcode ROM 305, then SEL is set to direct the mux 307 to select the incremented address input. If the micro instruction is a branch instruction, then SEL is configured to direct the mux 307 to provide the branch target address to the next address register 309. If the micro instruction is the last micro instruction in a micro instruction sequence, then the address sequencer 308 directs the mux 307 via SEL to provide the next entry point address to the next address register. In one example the translator may directly translate one or more initial micro instructions and provide these for execution while providing a next entry point to the mux 307 for access of the remaining micro instructions in a microcode sequence.

The microcode patch apparatus 300 also includes a patch array 312 that is coupled to the microcode address bus ADDR, and which generates a patch instruction output PATCH INSTRUCTION and a hit output HIT. In one embodiment, the patch array 312 is a fast associative array providing for lookup of up to 32 entries based upon the value of ADDR. In another embodiment the patch array 312 comprises a content-addressable memory (CAM) comprising 32 entries. As one skilled in the art will appreciate, a CAM is configured to be supplied with a data entity input (i.e., the contents of the next address register 309 in this embodiment) and then performs an extremely fast search of its entire contents (i.e., 32 entries) to determine if there is an entry corresponding to the provided input. If so, then the CAM outputs an associated piece of data. According to the present invention, the associated piece of data is a patch instruction corresponding to the provided address. The patch instruction is output to the mux 313 and signal HIT is asserted. HIT is coupled to a select input of the mux 313. When HIT is not asserted, the mux 313 is directed to select the microcode ROM output. When HIT is asserted, the mux 313 is directed to select the patch instruction for routing to the instruction register 310 rather than the micro instruction output by the microcode ROM 305.

Consequently, the accessing of micro instructions corresponding to the supplied microcode ROM address on ADDR is performed by the patch array 312 concurrent with access in the microcode ROM 305, and the microcode patch instruction is provided to the mux 313 in parallel with the output of the microcode ROM 303. Because the patch array 312 is accessed in parallel with the microcode ROM 305, no additional delay is incurred when a one-to-one microcode patch according to the present invention is performed.

The patch apparatus 300 includes a patch loader 311 which is coupled to the patch array 312 via a load bus LOAD and which is operatively coupled to system memory 332 and BIOS ROM 333 via known techniques. The patch loader 311 is coupled to a reset signal RESET, a patch fuse F 322 within a fuse array 321, and is capable of accessing a patch bit P 324 within a machine specific register 323. The patch loader 311 is employed to load the contents of the patch array 312 with patch data 334 located in BIOS 333 or with patch data 332 located in system memory 331, as directed. In one embodiment, following reset or power-up, instructions within the BIOS 333 are executed to direct the patch loader 311 to check the state of the fuse 322. If the fuse 322 is in a state (e.g., not blown or blown) that indicates the patch data 334 should be loaded, then the patch loader 311 is configured to retrieve the patch data 334 from the BIOS ROM 333 and the patch loader 311 loads the patch array 312. In another embodiment, the state of the fuse 322, as detected by instructions in BIOS 333 upon power-up or reset, directs the patch loader 311 to retrieve the patch data from a designated patch data location 332 in system memory 331. In an embodiment that provides for implementation of patches prior to execution of instructions in the BIOS 333, the apparatus 300 is configured to evaluate the state of the fuse 322 following reset, but prior to fetching of instructions from the BIOS 333. If the fuse 322 state indicates that a patch is to be loaded, then the patch loader 311 fetches the patch data 334 from the designated area in the BIOS ROM 333 and loads the data into the patch array 312. After the patch has been loaded, instructions are fetched from BIOS 333 for booting of the microprocessor. This embodiment is advantageous in situations where instructions within the BIOS 333 require a patch in order to properly boot the microprocessor. The embodiment is furthermore advantageous for patching initialization constants and register values which must be at a specified state in order for BIOS 333 to boot the microprocessor properly. In another embodiment, the patch loader 311 monitors the state of the patch bit 324 in the machine specific register 323. In this embodiment, the machine specific register 323 is not architecturally visible, but can be written through special procedures. For example, one embodiment comprehends the capability to write to the register 321 via an encrypted interface that employs privileged instructions. For purposes of this application, it is sufficient to note that when the P bit 324 is asserted, the patch loader 311 is directed to retrieve the patch data 332 from system memory 331 and to load the patch array 312 with patch addresses and patch instructions.

Advantageously, and in contrast to present day microcode patch techniques, the apparatus 300 according to the present invention enables microcode patches to be loaded during power-up/reset, or as a result of executing privileged sequences of instructions. In addition, the present invention overcomes the current limitations in the art by providing a technique whereby patches that have been loaded are substituted on a one-for-one basis in real-time. No additional delay is incurred in the pipeline when microcode patches according to the present invention are executed. Consequently, the apparatus 300 of FIGURE 3 is exceedingly useful when errors are found, say, in one or more bits of a given microcode instruction. Furthermore, any location within the microcode ROM 305 may be patched. That is, if an error is detected within, say, the tenth micro instruction in a sequence of 40 micro instructions corresponding to execution of an operation prescribed by a single macro instruction, then a one-for-one patch instruction may be loaded into the patch array 312 whose address match is the same as the location in the microcode ROM 305 in which the tenth micro instruction is stored.

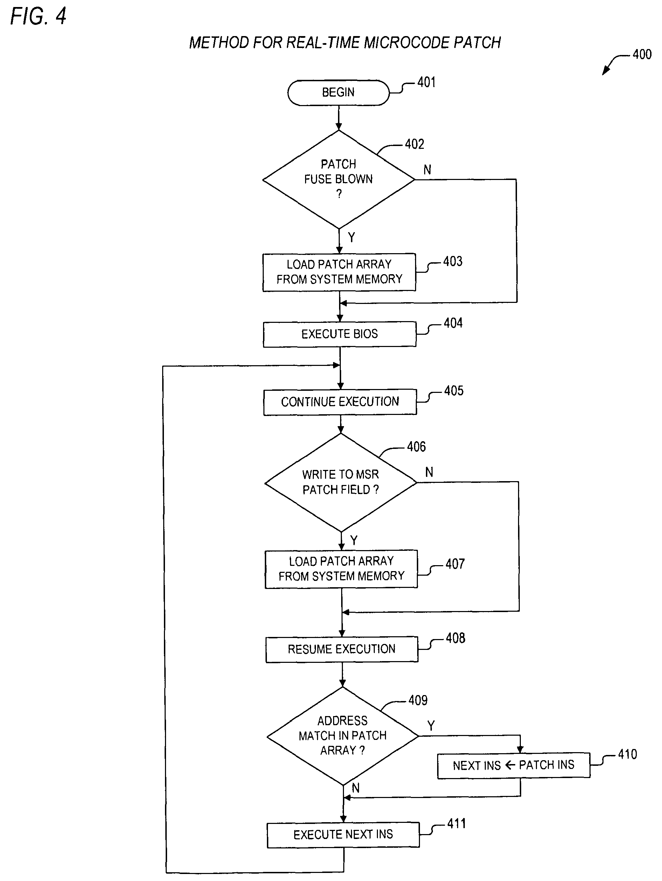

Now referring to FIGURE 4, a flow chart 400 is presented featuring a method according to the present invention for making real-time microcode patches. Flow begins at block 401 where a microprocessor according to the present invention undergoes power-up or reset. Flow then proceeds to block 402.

At decision block 402, an evaluation is made to determine if a patch fuse 322 within a fuse array 321 in the microprocessor has been blown. If not, then flow proceeds to block 404. If the fuse 322 has been blown, thus indicating that patch data should be loaded into the patch array 312, then flow proceeds to block 403.

At block 403, a patch loader 311 retrieves the patch data from a designated patch data location 334 in BIOS memory 333 and loads the patch data into the patch array 312. Flow then proceeds to block 404.

At block 404, fetch stage logic begins fetching instructions for execution from BIOS 333 to configure and initialize the microprocessor and processing system. As instructions are executed, flow then proceeds to block 405.

At block 405, instructions within the program flow are successively fetched and executed by the microprocessor. Flow then proceeds to decision block 406.

At decision block 406, an evaluation is made to determine if a patch field 324 within a machine specific register 323 has been set to a state that indicates a patch should be loaded into the patch array 312. If the patch field 324 indicates that a patch should not be loaded, then flow proceeds to block 408. If the patch field 324 indicates that a patch should be loaded, then flow proceeds to block 407.

At block 407, the patch loader 311 retrieves the patch data from a patch data location 332 in system memory 331 and loads the patch data into the patch array 312. Flow then proceeds to block 408.

At block 408, instruction fetch and execution by the microprocessor is continued. Macro instructions are directly translated into micro instructions and/or associated micro instructions are retrieved from microcode ROM 305. The addresses of locations in microcode ROM 305 are provided to the patch array 312 in parallel with provision of the addresses to the microcode ROM 305. Flow then proceeds to decision block 409.

At decision block 409, an evaluation is made to determine if a microcode address provided to the patch array 312 matches an address which was loaded. If not then flow proceeds to block 411. If an address does hit in the array 312, then flow proceeds to block 410.

At block 410, the patch array 312 outputs the patch instruction corresponding to the matched address and asserts signal HIT, thus directing the mux 313 to place the patch instruction into the instruction register 310 rather than the micro instruction retrieved from the microcode ROM 305. Flow then proceeds to block 411.

At block 411, instruction fetch and execution by the microprocessor is continued and flow proceeds to block 405.

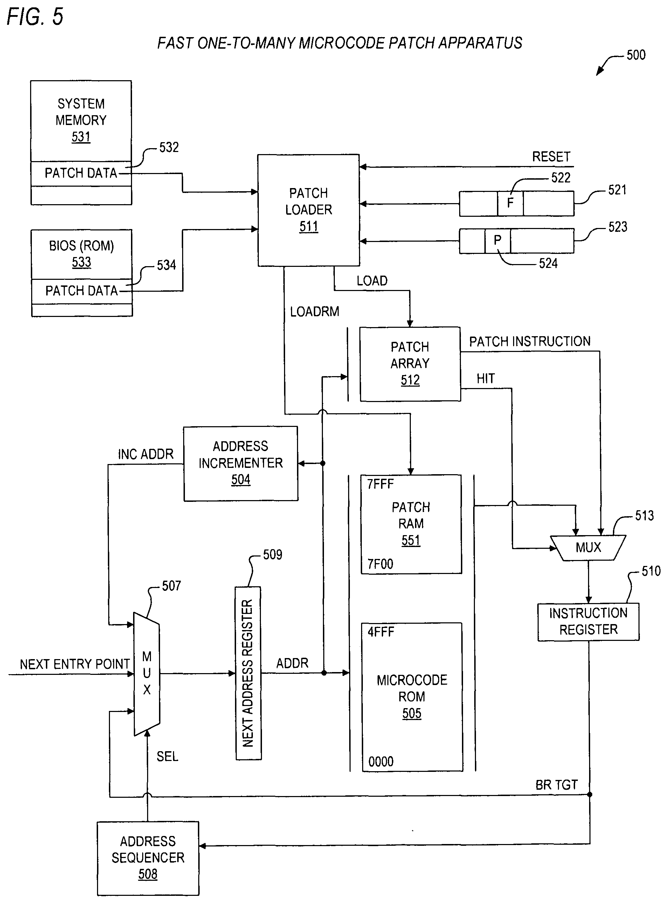

The discussion with reference to FIGURES 3-4 has focused on improvements according to the present invention that provide for one-to-one replacement of microcode instructions without impacting performance. But the present invention is also well suited and useful for performing one-to-many microcode patches, and provides performance benefits over that which has heretofore been provided, such as the technique which has been discussed above with reference to FIGURE 1. A mechanism for performing one-to-many microcode patches will now be discussed with reference to FIGURES 5-6.

Turning to FIGURE 5, a block diagram is presented showing an apparatus 500 according to the present invention for performing one-to-many microcode patch operations. As noted above, a one-to-many microcode patch operation is considered to be the replacement of the contents of a single microcode ROM location (i.e., a micro instruction) with a plurality of micro instructions. The patch apparatus 500 may be embodied within control ROM logic operating in either normal or native bypass mode, such as the control ROM 213 shown in FIGURE 2. In addition, the one-to-many microcode patch apparatus 500 according to the present invention is configured to perform a one-to-many microcode patch where only a single-cycle of delay is introduced into a microprocessor pipeline. The delay results from the execution of a microcode branch operation as the first operation in a one-to-many patch in order to direct fetching of microcode to a patch RAM area of microcode address space, as will be described in further detail below. Advantageously, the one-to-many patch operation according to the present invention provides for a significant improvement in throughput over conventional patch approaches, such as are described above with reference to FIGURE 1.

The one-to-many patch apparatus 500 includes a microcode ROM 505. In one embodiment, the microcode ROM 505 has 20,480 (0x500) 38-bit entries, and is disposed within a 32K-location microcode address space. Other embodiments are also contemplated. The apparatus 500 also includes a microcode patch RAM 551 that occupies a portion of the unused locations in the microcode address space. In one embodiment, the microcode patch RAM 551 comprises 256 38-bit entries and occupies the upper 256 locations (i.e., locations 0x7F00 through 0x7FFF) in the microcode address space. The microcode address space, including both ROM 505 and RAM 551, is accessed by a microcode address bus ADDR and the microcode ROM 505 or microcode RAM 551, as appropriate, provides micro instruction sequences as indexed by the value of ADDR to a mux 513. The output of the mux 513 is coupled to an instruction register 510. The instruction register 510 provides micro instructions to subsequent stages (not shown) in the microprocessor for execution. In one embodiment, the micro instructions are a plurality of machine specific instructions which have been encoded into a 38-bit entity. In this embodiment, contents of the instruction register 510 are provided to a microtranslator (not shown) for decoding and dispatch to functional units.

The address bus ADDR receives a microcode address from a next address register 509, whose input is coupled to the output of a mux 507. One of three mux inputs are selected as the mux output. The mux inputs are an incremented address INC ADDR that is generated by an address incrementer 504, a next entry point address NEXT ENTRY POINT, and a branch target address BR TGT. The address incrementer 504 increments a previous microcode space address provided on bus ADDR to enable indexing of a micro instruction in a next sequential microcode address location, such as may be employed in sequences of micro instructions. The branch target address is provided from a branch target field of a micro instruction currently in the instruction register 510 to enable branches in microcode ROM 505 and/or microcode RAM 551 to be performed. The next entry point is the location in the microcode ROM 505 or microcode RAM 551 containing micro instructions corresponding to a following micro instruction sequence such as may be associated with a next macro instruction. In one embodiment, the next entry point NEXT ENTRY POINT is provided to the patch apparatus 500 via a handoff bus from a translator according to the present invention, such as the translator 212 and handoff bus 216 discussed with reference to FIGURE 2. An address sequencer 508 is coupled to the instruction register 510 and generates a value on bus SEL which directs the mux 507 to select one of its three inputs. The address sequencer 508 determines what type of micro instruction is in the instruction register 510. That is, if the micro instruction has a following micro instruction stored in microcode ROM 505 or microcode RAM 551, then SEL is set to direct the mux 507 to select the incremented address input. If the micro instruction is a branch instruction, then SEL is configured to direct the mux 507 to provide the branch target address to the next address register 509. If the micro instruction is the last micro instruction in a micro instruction sequence, then the address sequencer 508 directs the mux 507 via SEL to provide the next entry point address to the next address register. In one embodiment, the translator may directly translate one or more initial micro instructions and provide these for execution while concurrently providing a next entry point to the mux 507 for access of the remaining micro instructions in a microcode sequence.

Like the one-to-one patch apparatus 300 described above with reference to FIGURES 3-4, the microcode patch apparatus 500 also includes a patch array 512 that is coupled to the microcode address bus ADDR, and which generates a patch instruction output PATCH INSTRUCTION and a hit output HIT. In one embodiment, the patch array 512 is a fast associative array providing for lookup of up to 32 entries based upon the value of ADDR. In another embodiment the patch array 512 comprises a content-addressable memory (CAM) comprising 32 entries. The patch array 512 is supplied with the contents of the next address register 509 and performs an extremely fast search of its entire contents (i.e., 32 entries) to determine is there is an entry corresponding to the provided input. If so, then the patch array 512 outputs a patch instruction corresponding to the provided address. The patch instruction is output to the mux 513 and signal HIT is asserted. HIT is coupled to a select input of the mux 513. When HIT is not asserted, the mux 513 is directed to select the microcode ROM output or microcode RAM output, as appropriate. When HIT is asserted, the mux 513 is directed to select the patch instruction for routing to the instruction register 510 rather than the micro instruction output by the microcode ROM/RAM 505/551.

The patch RAM 551 is a volatile and loadable set of locations within the microcode address space, which are employed to provide for one-to-many microcode patches. When a microcode patch is required that comprises a plurality of micro instructions to replace a single micro instruction that is stored at a particular address in the microcode ROM 505, the replacement plurality of micro instructions is stored, as described below, in a replacement location in RAM 551, where the first micro instruction in the replacement plurality of micro instruction is stored in a first location in the RAM 551, and where a microcode branch instruction, having the first location in the RAM 551 as a branch target address, is loaded into the patch array 512 as data corresponding to the particular address. Consequently, when the particular address of the micro instruction to be patched is supplied on bus ADDR, it is also concurrently supplied to the patch array 512. And while the microcode ROM 505 contents are accessed, the stored microcode branch instruction is provided by the patch array 512 to the mux 513 in parallel with the output of the microcode ROM 505. Since the contents of ADDR resulted in a match in the patch array 512, signal HIT is asserted, and the microcode branch instruction retrieved from the patch array 512 is routed through the mux 513 to the instruction register 510, at no additional delay. The address sequencer 508 notes that a microcode branch instruction is within the instruction register 510 and the branch target address, designating said first location in the patch RAM 551, is input to the mux 507. Thus, the address sequencer 508 directs the mux 507 via SEL to select the branch target address, which is then supplied on ADDR to the microcode address space, and which selects said first location in the microcode RAM 551, that is, the location containing the first micro instruction in the one-to-many microcode patch. Subsequent micro instructions in the patch are accessed from the RAM 551 via incremented addresses provided by the address incrementer 504 until a final micro instruction in the patch sequence is fetched and detected by the address sequencer 508, which responds by directing the mux 507 to select the next entry point. In addition, the patch that is loaded into the RAM 551 may also include a micro instruction that causes a branch back to a location in the microcode ROM 505.

The patch apparatus 500 includes a patch loader 511 that is coupled to the patch array 512 via a load bus LOAD and to the patch RAM 551 via a load RAM bus LOADRM, and which is operatively coupled to system memory 532 and BIOS ROM 533 via known techniques. The patch loader 511 is coupled to a reset signal RESET, a patch fuse F 522 within a fuse array 521, and is capable of accessing a patch bit P 524 within a machine specific register 523. The patch loader 511 is employed to load the contents of the patch array 512 and the patch RAM 551 with patch data 534 located in BIOS 533 or with patch data 532 located in system memory 531, as directed.

Operationally, loading of the patch array 512 and patch RAM 551 are performed in substantially the same manner as the patch array 312 is loaded within the apparatus 300 of FIGURE 3, the difference being that the supplied patch data 532, 534 includes data for loading both the array 512 and the RAM 551 and that the patch loader 511 loads both the array 512 and the RAM 551, as similarly described above for like numbered elements with reference to FIGURE 3, responsive to the state of the fuse 522, the instructions for loading contained in BIOS 533, and the state of the patch bit 524 within the machine specific register 523.

Consequently, the apparatus 500 according to the present invention enables one-to-many microcode patches to be loaded during power-up/reset, or during the execution of instructions which are not typically architecturally provided for, and provides for accessing the one-to-many microcode patch in a manner significantly faster than present day techniques. The apparatus 500 of FIGURE 5 is very useful when errors are found that require a plurality of micro instructions as a patch to replace a micro instruction that has been burned into microcode ROM 505. In addition, the one-to-many apparatus 500 enables proposed one-to-many microcode patches to be easily implemented in a manner that minimizes the performance impact of the patches. Furthermore, the method for affecting a one-to-many patch according to the present invention remains consistent with that required for a one-to-one patch, where a one-to-one patch simply substitutes an microcode branch to the target address in RAM 551 that contains the one-to-many patch.

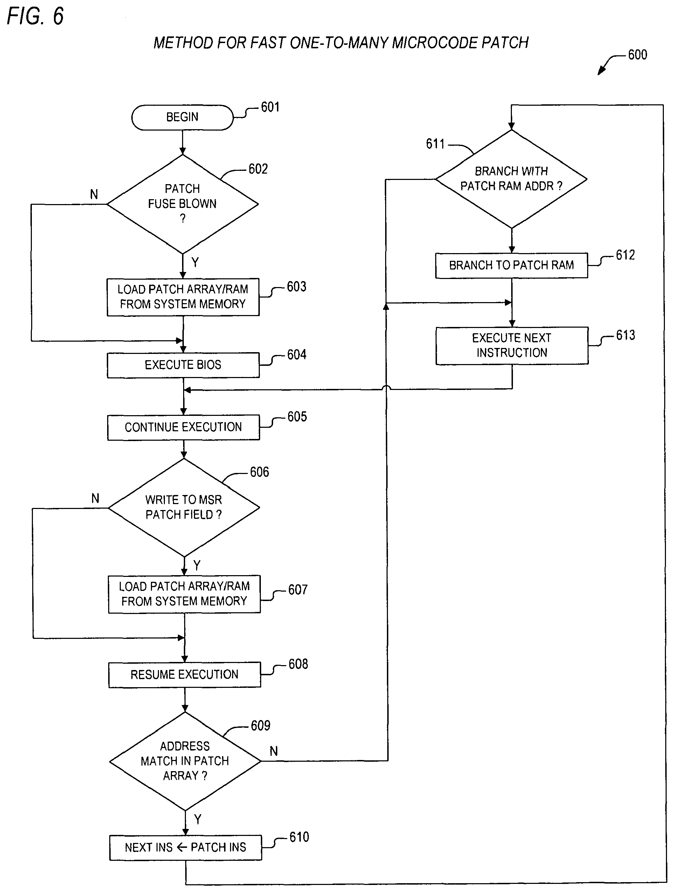

Now referring to FIGURE 6, a flow chart 600 is presented featuring a method according to the present invention for making one-to-many microcode patches. Flow begins at block 601 where a microprocessor according to the present invention undergoes power-up or reset. Flow then proceeds to decision block 602.

At decision block 602, an evaluation is made to determine if a patch fuse 522 within a fuse array 521 in the microprocessor has been blown. If not, then flow proceeds to block 604. If the fuse 522 has been blown, thus indicating that patch data should be loaded into the patch array 512 and patch RAM 551, then flow proceeds to block 603.

At block 603, a patch loader 511 retrieves the patch data from a designated patch data location 534 in BIOS 533 and loads the patch data into the patch array 512 and patch RAM 551. The patch data comprises a microcode branch instruction which is loaded into the patch array 512, where the target address for the microcode branch instruction is a location in the patch RAM 551 for the first micro instruction in the one-to-many microcode patch. The patch data also comprises the one-to-many microcode patch, which is loaded by the patch loader 511 into the patch RAM 551 at the target location. Flow then proceeds to block 604.

At block 604, fetch stage logic begins fetching instructions for execution from BIOS 533 to configure and initialize the microprocessor and processing system. As instructions are executed, flow then proceeds to block 605.

At block 605, instructions within the program flow are successively fetched and executed by the microprocessor. Flow then proceeds to decision block 606.

At decision block 606, an evaluation is made to determine if a patch field 524 within a machine specific register 523 has been set to a state that indicates a patch should be loaded into the patch array 512 and patch RAM 551. If the patch field 524 indicates that a patch should not be loaded, then flow proceeds to block 608. If the patch field 524 indicates that a patch should be loaded, then flow proceeds to block 607.

At block 607, the patch loader 511 retrieves the patch data from a patch data location 332 in system memory 533 and loads the patch data into the patch array 512 and patch RAM 551 as described above with reference to block 604. Flow then proceeds to block 608.

At block 608, instruction fetch and execution by the microprocessor is continued. Macro instructions are directly translated into micro instructions and/or associated micro instructions are retrieved from microcode ROM 505. The addresses of locations in microcode ROM 505 are provided to the patch array 512 in parallel with provision of the addresses to the microcode ROM 505. Flow then proceeds to decision block 609.

At decision block 609, an evaluation is made to determine if a microcode address provided to the patch array 512 matches an address which was loaded. If not then flow proceeds to block 613. If an address does hit in the array 512, then flow proceeds to block 610.

At block 610, the patch array 512 outputs a substitute instruction corresponding to the matched address and asserts signal HIT, thus directing the mux 513 to place the substitute instruction into the instruction register 510 rather than the micro instruction retrieved from the microcode ROM 505. Flow then proceeds to decision block 611.

At decision block 611, an evaluation is made to determine if the substitute instruction in the instruction register 510 is a microcode branch instruction having a target address in the patch RAM 551. If so, the block proceeds to block 612. If not, then flow proceeds to block 613.

At block 612, the microcode branch is performed by providing the branch target address of the microcode branch instruction to bus ADDR, and the location in the patch RAM 551 having the first micro instruction in the one-to-many patch is retrieved. Flow then proceeds to block 613

At block 613, instruction fetch and execution by the microprocessor is continued and flow proceeds to block 605.

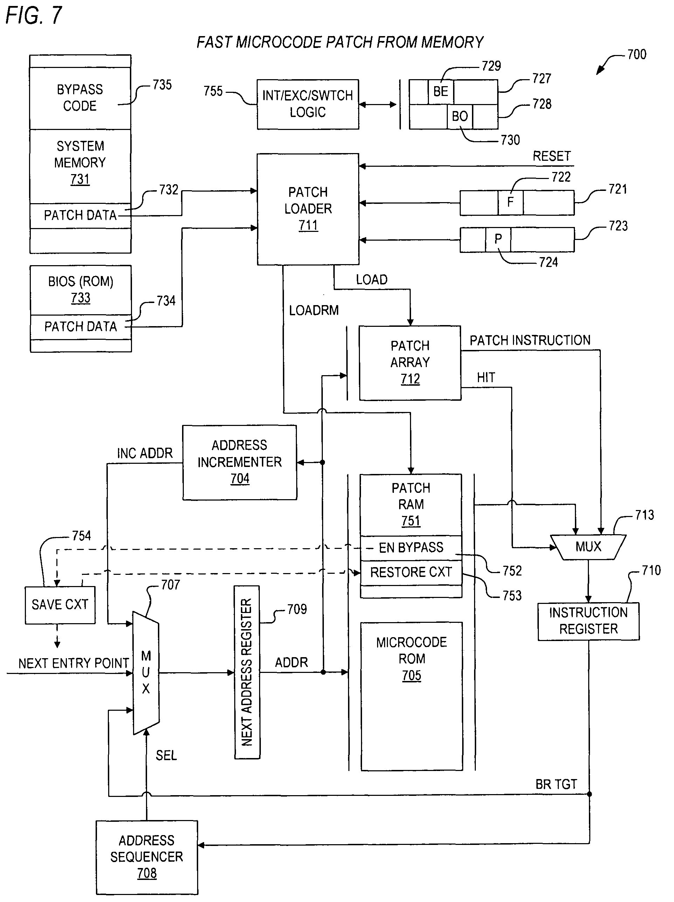

Now that the performance of one-to-one and one-to-many microcode patches according to the present invention has been described, attention is now directed to FIGURES 7-9 where details are presented that enable more flexible testing, simulation, and debug operations to be performed which employ the apparatus and methods previously discussed in a manner that allows microcode patches to be executed from system memory. For purposes of this application, the mode of execution for these patches is called translator bypass mode or native bypass mode. Such a mode of operation has been described above with reference to the discussion of FIGURE 2, where it is disclosed that micro instructions may be interlaced with architectural macro instructions as part of a program flow stored in system memory. In one embodiment, the macro instructions are x86 macro instructions for execution by an x86-compatible microprocessor. Details will now discussed with reference to the following figures that illustrate how a programmer, designer, or debugger would employ aspects of the present invention to enter and exit translator bypass mode, and how native instructions may be interlaced with macro instructions within a program flow for purposes of debugging current microcode routines by inserting microcode instructions which enable access to native resources such as machine specific registers, hidden registers, and the like, and how native instructions corresponding to proposed microcode routines may be tested prior to burning them into ROM. In addition, specific microcode routines may be programmed into system memory and executed therefrom for purposes of boundary conditions testing, in-process testing, hardware debug, and a number of other test activities.

Turning to FIGURE 7, a block diagram is presented detailing an apparatus 700 according to the present invention for performing a microcode patch from system memory. The apparatus 700 is substantially similar to the one-to-many patch apparatus 500 discussed above with reference to FIGURES 5-6, with the addition of elements and features necessary to execute microcode sequences which are stored in memory 731 as opposed to sequences stored in a patch array 712 or patch RAM 751. Operation of elements of the apparatus 700 of FIGURE 7 is substantially similar to the operation of like-numbered elements of the apparatus 500 of FIGURE 5, where the hundreds digit is replaced with a "7."

In addition to elements common to the apparatus 500 of FIGURE 5, the apparatus 700 includes interrupt/execution/switch logic 755 that accesses a bypass enable BE bit 729 within a machine specific register 727 and a bypass on BO bit 730 within a flags register 728. The apparatus 700 also depicts bypass code 735 stored within system memory 731. The bypass code 735 can comprise a plurality of wrapper-encapsulated micro instructions or it can include a program flow of macro instructions having wrapper-encapsulated micro instructions interlaced therein. The bypass code 735 is the program flow that is to be executed by the microprocessor in place of a given micro instruction.

The apparatus 700 additionally shows an enable bypass sequence of micro instructions 752 loaded within the patch RAM 751. The enable bypass sequence 752 is employed by the translate stage to store the context of an immediately preceding macro instruction that is translated and executed prior to entering translator bypass mode. The context is stored in a save context array 754. In one embodiment, the save context array 754 is one or more machine specific registers. Exemplary context information includes the address of the immediately preceding macro instruction, its next sequential instruction pointer, etc. It is required that sufficient information associated with the immediately preceding macro instruction be stored in the save context array 754 so that execution of the normal macro instruction program flow can be restored upon termination of translator bypass mode. For restoring the normal macro instruction flow, a restore context sequence of micro instructions 753 is loaded into the patch RAM 753. To terminate translator bypass mode, a microcode branch instruction is executed in the bypass code 735 that has a branch target address specifying the location of the restore context microcode sequence 753. In one embodiment, the restore context sequence may be permanently stored in the microcode ROM 705 instead of loaded into the patch RAM 751.

In operation, the patch array 712 and patch RAM 751 are loaded as described above. A microcode branch instruction is loaded into the patch array 712 at the microcode ROM address of the micro instruction which is to be replaced, simulated, tested, etc. The microcode branch instruction in the patch array 712 includes a branch target address of a first micro instruction in the enable bypass sequence 752 which is loaded in the patch RAM 751. Hence, when the address of the micro instruction to be replaced is provided on ADDR, the patch array 712 causes the microcode branch instruction to be issued and executed, thus directing flow to the enable bypass sequence 752 in the patch RAM 751. The enable bypass sequence 752 comprises micro instructions that direct the interrupt/execution/switch logic 755 to assert the BE bit 729, thus indicating to translation logic 200, as described with reference to FIGURE 2, that bypass mode is enabled. The last micro instruction in the enable bypass sequence comprises a branch to the bypass code 735 stored within system memory 731. Thereafter, the bypass logic 220 performs those operations necessary to detect the wrapper instructions, strip the native instructions from within the wrapper instructions, and route the native instructions to the native bus 215.

While the microprocessor is in translator bypass mode, interrupts and other task control transfer events (hereinafter collectively referred to as "interrupts") are signaled to the int/exc/swtch logic 755 via known mechanisms. As part of processing an interrupt, the state of bit BE 729 in the register 727 is checked to determine if the microprocessor is in native bypass mode. If so, this state is saved prior to processing the interrupt by asserting bit BO 730 in the flags register 728. It is required that the flags register 728 be an architectural register within the microprocessor whose state is preserved during task control transfers and whose state is restored upon control returns. In an x86 embodiment, the flags register 728 comprises the EFLAGS register in an x86-compatible microprocessor and bit BO 730 comprises bit 31 of the EFLAGS register. If an interrupt occurs when bit BE 729 is asserted (indicating that bypass mode is enabled), then the int/exc/swtch logic 755 asserts the BO bit 730 in the flags register 728 prior to processing the interrupt. In addition, bit BE 729 is cleared, thereby disabling native bypass mode. Should a wrapper macro instruction be encountered within an interrupt service routine or other application to which control has been passed prior to returning from the interrupt, then the instruction translation stage 200 will interpret the wrapper macro instruction according to architectural specifications of the controlling ISA, which in one embodiment comprises causing an exception. In this manner, application programs can employ interlaced native instructions without causing problems for operating system modules that service these events or for other application programs to which program control is transferred.

Upon return from an interrupting event to an application program that employs native bypass mode, the int/exc/swtch logic 755 checks the state of the restored BO bit 730 in the flags register 728. If the bit 730 indicates that native bypass mode was previously enabled, then bit BE 729 is set to re-enable bypass mode. Control is then returned to the application program and subsequent macro instructions (including wrapper instructions) are again executed. The status of the BO bit 730 can also be checked by the application program that employs native bypass mode to determine if an interrupt has occurred that may have changed the state or contents of any native resource that was being used prior to the interrupt occurring. Since native resources are not architecturally specified to persist through interrupting events, an interrupt handler or other application program to which program control was transferred may have changed the state of a native resource currently being used by the application program that employs bypass mode. In an alternative embodiment, the flags register 728 comprises a native register within the microprocessor whose contents are cleared by execution of a native instruction within a program flow while in native bypass mode. According to the alternative embodiment, the int/exc/swtch logic 755 sets the value of this native register 728 to a non-zero value upon return from interrupt, thereby providing a means whereby the native bypass application can determine if an interrupt has occurred. In a further embodiment, the flags register 728 comprises both an architectural flags register having a BO bit 730 and a native register that operate as described above to provide two indications to a native bypass application that an interrupt has occurred.

As noted above, translator bypass mode is terminated by executing a microcode branch to the restore context sequence 753. In one embodiment, the restore context sequence directs the translate stage to reload the macro instruction context stored in the save context array 754 and which directs the interrupt/execution/switch logic 755 to deassert bit BE 729, thus placing the translate stage 200 back in normal operating mode. A final microcode instruction in the restore context sequence 753 is executed indicates to the address sequencer 708 that a final micro instruction in a sequence has been executed and which results in a next entry point being provided to the mux 707 which corresponds to a macro instruction following the one whose context was saved prior to entering translator bypass mode. An alternative embodiment is contemplated as well where the he enable bypass sequence 752 comprises micro instructions that direct the interrupt/execution/switch logic 755 to completely disable interrupts during translator bypass mode operations. According to this embodiment, the only operations that need to be performed in order to preserve context is to save the current interrupt mask, mask the interrupts during translator bypass mode, and then restore the interrupt mask prior to returning to normal operating mode.

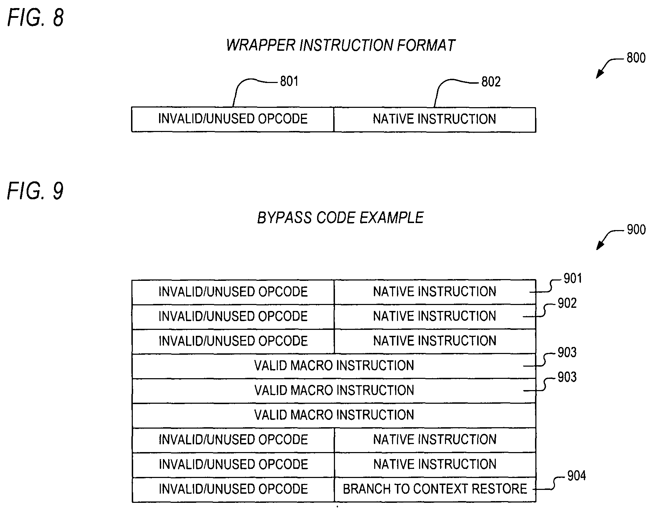

Now turning to FIGURE 8, a block diagram is presented illustrating an exemplary wrapper macro instruction 800 according to the present invention. The wrapper instruction 800 includes an opcode field 801 and a native instruction field 802. In a preferred embodiment, the opcode field comprises an invalid or unused opcode value according to the instruction set architecture which is employed. In an alternative embodiment, a valid opcode may be employed, with the limitation that execution of instructions having the valid opcode are precluded when in translator bypass mode.

The native instruction field 802 comprises one or more micro instructions which are to be executed. In one embodiment, one micro instruction is embedded within the native instruction field 802. In another embodiment, a 38-bit encoding of three micro instructions is embedded within the native instruction field 802. In a third embodiment, a plurality of micro instructions to be sequentially executed are provided in the native instruction field 802.

Referring to FIGURE 9, a diagram 900 is presented showing an of translator bypass code 900 according to the present invention. The diagram 900 depicts a number of wrapper macro instructions 901, 902, 904 interlaced in the program flow 900 that includes several valid macro instructions 903 as well. As noted above, the bypass code 900 is loaded into system memory where address of the first instruction 901 in the code 900 is provided as a branch target address within a last micro instruction within the enable bypass microcode sequence 752 that is loaded into the patch RAM 751. Accordingly, the enable bypass sequence 752 performs those operations necessary to place the microprocessor into translator bypass mode and to perform a branch to the first instruction 901 in the bypass code 900. When the first instruction 901 enters into the translate stage, bypass logic detects the invalid/unused opcode, strips the embedded native instruction from within, and provides the native instruction on the native bus for execution. Subsequently fetched wrapper instructions 902, 904 are similarly processed. In addition, valid macro instructions 903 may be included in the bypass code 900. When the valid macro instructions 903 enter into the translate stage, they are translated by the translator/control ROM accordingly, and their associated micro instructions are provided to the native bus for execution.

When the last wrapper instruction 904 is provided to the translate stage, bypass logic strips the native instruction from within, which is a microcode branch to a first location in the context restore sequence 753 stored within the patch RAM 751. Accordingly, program flow branches to the restore sequence 753, which restores the context for normal operation and terminates translator bypass mode.

Those skilled in the art should appreciate that they can readily use the disclosed conception and specific embodiments as a basis for designing or modifying other structures for carrying out the same purposes of the present invention, and that various changes, substitutions and alterations can be made herein without departing from the scope of the invention as defined by the appended claims.

## Claims

1. An apparatus (500, 700) for performing a one-to-many microcode patch, the apparatus comprising:
a microcode ROM address bus, configured to provide a microcode ROM address of a location in a microcode ROM (505, 705), said microcode ROM address indexing a micro instruction sequence that corresponds to a macro instruction;
a patch array (512, 712), configured to receive said microcode ROM address and to determine that said microcode ROM address matches one of a plurality of entries within said patch array, and configured to output a corresponding branch instruction and to assert a hit signal when said microcode ROM address matches;
a mux (513, 713), configured to receive said branch instruction from said patch array (512, 712) and a micro instruction corresponding to said microcode ROM address from said microcode ROM (505, 705), and configured to provide said micro instruction or said corresponding branch instruction to an instruction register (510, 710) based upon the state of said hit signal, wherein said branch instruction prescribes a microcode branch target address; and
a RAM (551, 751), configured to store a plurality of patch instructions, wherein said plurality of patch instructions are to be executed in place of said micro instruction, and wherein a first one of said plurality of patch instructions is stored at a location in said RAM corresponding to said microcode branch target address.

2. The apparatus as recited in claim 1, wherein said microcode ROM (505, 705) is operatively coupled to a translator (212) within a translate stage (200) of a microprocessor, and wherein said microcode ROM address corresponds to a next entry point provided by said translator.

3. The apparatus as recited in claim 2, wherein said microprocessor comprises an x86-compatible microprocessor.

4. The apparatus as recited in claim 1, wherein said patch array (512, 712) comprises a content-addressable memory (CAM).

5. The apparatus as recited in claim 1, wherein said plurality of entries comprises 32 entries, and wherein each of said plurality of entries comprises a corresponding microcode ROM address and a corresponding patch instruction.

6. The apparatus as recited in claim 1, wherein said micro instruction comprises one or more machine specific instructions.

7. The apparatus as recited in claim 1, wherein said micro instruction comprises an encoding of a plurality of machine specific instructions.

8. The apparatus as recited in claim 1, further comprising:
a patch loader (511, 711), operatively coupled to system memory (531, 731) and a BIOS ROM (533, 733), and configured to retrieve said corresponding branch instruction and said plurality of patch instructions from said system memory and to load said corresponding branch instruction into said patch array (512, 712) and said plurality of patch instructions into said RAM (551, 751).

9. The apparatus as recited in claim 8, wherein said patch loader (511, 711) loads said corresponding branch instruction and said plurality of patch instructions following transition of a microprocessor reset signal and prior to execution of instructions stored in said BIOS ROM (533, 733), and wherein said branch instruction and said plurality of patch instructions are stored in said BIOS ROM (533, 733).

10. The apparatus as recited in claim 8, wherein said patch loader (511, 711) loads said corresponding branch instruction and said plurality of patch instructions based upon execution of privileged operating system instructions which are executed based upon the state of a patch bit (524, 724) within a machine specific register (523, 723).

11. A method for performing a one-to-many microcode patch corresponding to a micro instruction stored in microcode ROM, comprising:
within a translate stage (200) of a microprocessor, concurrently providing a microcode ROM address to a microcode ROM (505, 705) and to a patch array (512, 712), the microcode ROM address indexing a micro instruction sequence stored in the microcode ROM that corresponds to a macro instruction;
determining that the microcode ROM address matches one of a plurality of entries within the patch array (512, 712), outputting a corresponding branch instruction, and asserting a hit signal, wherein the branch instruction prescribes a branch target address;
responsive to assertion of the hit signal, routing the corresponding branch instruction to an instruction register (510, 710) for execution;
branching to a location in a microcode RAM (551, 751) that corresponds to the branch target address, and subsequently executing one or more patch instructions which are stored at the location in the microcode RAM (551, 751).

12. The method as recited in claim 11, wherein the microcode ROM address is provided responsive to generation of a next entry point by a translator (212).

13. The method as recited in claim 11, wherein the patch array (512, 712) comprises a content-addressable memory (CAM).

14. The method as recited in claim 11, wherein the plurality of entries comprises 32 entries, and wherein each of the plurality of entries comprises a corresponding microcode ROM address and a corresponding patch instruction.

15. The method as recited in claim 11, wherein the micro instruction comprises one or more machine specific instructions.

16. The method as recited in claim 11, wherein the micro instruction comprises an encoding of a plurality of machine specific instructions.

17. The method as recited in claim 11, further comprising:
retrieving the branch instruction and the one or more patch instructions from system memory (531, 731) and loading the branch instruction into the patch array (512, 712) and the one or more patch instructions into the microcode RAM (551, 751).

18. The method as recited in claim 11, further comprising:
following transition of a microprocessor reset signal and prior to execution of instructions stored in BIOS ROM (533, 733), retrieving the branch instruction and the one or more patch instructions from the BIOS ROM and loading the branch instruction into the patch array and the one or more patch instructions into the microcode RAM (551, 751).

19. The method as recited in claim 17, wherein said loading is performed based upon execution of privileged operating system instructions which are executed based upon the state of a patch bit (524, 724) within a machine specific register (523, 723).

## Patentansprüche

1. Vorrichtung (500, 700) zur Ausführung eines One-to-Many-Mikrocode-Patches, die Vorrichtung umfassend:
einen Mikrocode-ROM-Adressbus, der ausgestaltet ist, um eine Mikrocode-ROM-Adresse einer Stelle in einem Mikrocode-ROM (505, 705) bereitzustellen, wobei die Mikrocode-ROM-Adresse eine Mikrobefehls-Sequenz indexiert, die einem Makrobefehl entspricht;
eine Patch-Anordnung (512, 712), die ausgestaltet ist, um die Mikrocode-ROM-Adresse zu empfangen und festzulegen, dass die Mikrocode-ROM-Adresse mit einem von mehreren Einträgen innerhalb der Patch-Anordnung übereinstimmt, und die ausgestaltet ist, um einen entsprechenden Verzweigungsbefehl auszugeben und ein Treffersignal auszugeben, wenn die Mikrocode-ROM-Adresse übereinstimmt;
einen Mux (513, 713), der ausgestaltet ist, um den Verzweigungsbefehl von der Patch-Anordnung (512, 712) und einen Mikrobefehl, der der Mikrocode-ROM-Adresse entspricht, von dem Mikrocode-ROM (505, 705) zu empfangen, und der ausgestaltet ist, um den Mikrobefehl oder den entsprechenden Verzweigungsbefehl aufgrund des Zustands des Treffersignals einem Befehlsregister (510, 710) bereitzustellen, wobei der Verzweigungsbefehl eine Mikrocode-Verzweigungs-Zieladresse vorschreibt; und
ein RAM (551, 751), das ausgestaltet ist, um mehrere Patchbefehle zu speichern, wobei die mehreren Patchbefehle an Stelle des Mikrobefehls ausgeführt werden sollen und wobei ein erster der mehreren Patchbefehle an einer Stelle in dem RAM gespeichert wird, die der Mikrocode-Verzweigungs-Zieladresse entspricht,

2. Vorrichtung nach Anspruch 1, wobei der Mikrocode-ROM (505, 705) in Wirkbeziehung mit einem Übersetzer (212) innerhalb einer Übersetzungsstufe (200) eines Mikroprozessors gekoppelt ist und wobei die Mikrocode-ROM-Adresse einem nächsten Eingabepunkt, der von dem Übersetzer bereitgestellt wird, entspricht.

3. Vorrichtung nach Anspruch 2, wobei der Mikroprozessor einen x86-kompatiblen Mikroprozessor aufweist.

4. Vorrichtung nach Anspruch 1, wobei die Patch-Anordnung (512, 712) einen inhaltsadressierbaren Speicher (CAM) aufweist.

5. Vorrichtung nach Anspruch 1, wobei die mehreren Einträge 32 Einträge aufweisen und wobei jeder der mehreren Einträge eine entsprechende Mikrocode-ROM-Adresse und einen entsprechenden Patchbefehl aufweist.

6. Vorrichtung nach Anspruch 1, wobei der Mikrobefehl einen oder mehrere maschinenspezifische Befehle aufweist.

7. Vorrichtung nach Anspruch 1, wobei der Mikrobefehl eine Kodierung von mehreren maschinenspezifischen Befehlen aufweist.

8. Vorrichtung nach Anspruch 1, ferner umfassend:
einen Patch Loader (511, 711), der in Wirkbeziehung mit dem Systemspeicher (531, 731) und einem BIOS-ROM (533, 733) gekoppelt ist und der ausgestaltet ist, um den entsprechenden Verzweigungsbefehl und die mehreren Patchbefehle aus dem Systemspeicher abzurufen und den entsprechenden Verzweigungsbefehl in die Patch-Anordnung (512, 712) und die mehreren Patchbefehle in den RAM (551, 751) zu laden.

9. Vorrichtung nach Anspruch 8, wobei der Patch Loader (511, 711) den entsprechenden Verzweigungsbefehl und die mehreren Patchbefehle nach dem Übergang eines Mikroprozessor-Rücksetzsignals und vor der Ausführung von Befehlen, die in dem BIOS ROM (533, 733) gespeichert sind, lädt und wobei der Verzweigungsbefehl und die mehreren Patchbefehle in dem BIOS ROM (533, 733) gespeichert sind.

10. Vorrichtung nach Anspruch 8, wobei der Patch Loader (511, 711) den entsprechenden Verzweigungsbefehl und die mehreren Patchbefehle aufgrund der Ausführung von bevorzugten Betriebssystembefehlen, die aufgrund des Zustands eines Patch-Bits (524, 724) innerhalb eines maschinenspezifischen Registers (523, 723) ausgeführt werden, lädt.

11. Verfahren zur Ausführung eines One-to-Many-Mikrocode-Patches, der einem in einem Mikrocode-ROM gespeicherten Mikrobefehl entspricht, umfassend:
innerhalb einer Übersetzungsstufe (200) eines Mikroprozessors die gleichzeitige Bereitstellung einer Mikrocode-ROM-Adresse an einen Mikrocode-ROM (505, 705) und an eine Patch-Anordnung (512, 712), wobei die Mikrocode-ROM-Adresse eine Mikrobefehl-Sequenz indexiert, die in dem Mikrocode-ROM gespeichert ist, die einem Makrobefehl entspricht;
Festlegung, dass die Mikrocode-ROM-Adresse mit einem von mehreren Einträge innerhalb der Patch-Anordnung (512, 712) übereinstimmt, Ausgabe eines entsprechenden Verzweigungsbefehls und Ausgabe eines Treffersignals, wobei der Verzweigungsbefehl eine Verzweigungs-Zieladresse vorschreibt;
in Reaktion auf die Ausgabe des Treffersignals Weiterleitung des entsprechenden Verzweigungsbefehls an ein Befehlsregister (510, 710) zwecks Ausführung;
Verzweigung an eine Stelle in einem Mikrocode-RAM (551, 751), die der Verzweigungs-Zieladresse entspricht, und nachfolgende Ausführung eines oder mehrerer Patchbefehle, die an der Stelle in dem Mikrocode-RAM (551, 751) gespeichert sind.

12. Verfahren nach Anspruch 11, wobei die Mikrocode-ROM-Adresse in Reaktion auf die Erzeugung eines nächsten Eingabepunkts durch einen Übersetzer (212) bereitgestellt wird.

13. Verfahren nach Anspruch 11, wobei die Patch-Anordnung (512, 712) einen inhaltsadressierbaren Speicher (CAM) aufweist.

14. Verfahren nach Anspruch 11, wobei die mehreren Einträge 32 Einträge aufweisen und wobei jeder der mehreren Einträge eine entsprechende Mikrocode-ROM-Adresse und einen entsprechenden Patchbefehl aufweist.

15. Verfahren nach Anspruch 11, wobei der Mikrobefehl einen oder mehrere maschinenspezifische Befehle aufweist.

16. Verfahren nach Anspruch 11, wobei der Mikrobefehl eine Kodierung von mehreren maschinenspezifischen Befehlen aufweist.

17. Verfahren nach Anspruch 11, das ferner umfasst:
Abrufen des Verzweigungsbefehls und des einen oder der mehreren Patchbefehle aus dem Systemspeicher (531, 731) und Laden des Verzweigungsbefehls in die Patch-Anordnung (512, 712) und des einen oder der mehreren Patchbefehle in den Mikrocode-RAM (551, 751).

18. Verfahren nach Anspruch 11, das ferner umfasst:
nach dem Übergang eines Mikroprozessor-Rückstellsignals und vor der Ausführung von Befehlen, die in dem BIOS ROM (533, 733) gespeichert sind, Abrufen des Verzweigungsbefehls und des einen oder der mehreren Patchbefehle aus dem BIOS ROM und Laden des Verzweigungsbefehls in die Patch-Anordnung und des einen oder der mehreren Patchbefehle in den Mikrocode-RAM (551, 751).

19. Verfahren nach Anspruch 17, wobei das Laden aufgrund der Ausführung von bevorzugten Betriebssystembefehlen, die aufgrund des Zustands eines Patch-Bits (524, 724) innerhalb eines maschinenspezifischen Registers (523, 723) ausgeführt werden, ausgeführt wird.

## Revendications

1. Appareil (500, 700) pour produire un patch à microcode d'un à plusieurs, l'appareil comprenant
un bus d'adresses ROM de microcodes configuré pour fournir une adresse ROM de microcode d'un endroit dans une ROM de microcodes (505, 705), ladite adresse ROM de microcode indexant une séquence de micro-instructions qui correspond à une macro-instruction,
un champ de patchs (512, 712) configuré pour recevoir ladite adresse ROM de microcode et pour déterminer que ladite adresse ROM de microcode correspond à une parmi une pluralité d'entrées dans ledit champ de patchs, et configuré pour émettre une instruction correspondante de branchement et pour délivrer un signal de hit lorsque ladite adresse ROM de microcode correspond, et
un multiplexeur (513, 713) configuré pour recevoir ladite instruction de branchement provenant du champ de patchs (512, 712) et une micro-instruction correspondant à ladite adresse ROM de microcode provenant de la ROM de microcodes (505, 705), et configuré pour fournir ladite micro-instruction ou ladite instruction de branchement correspondante à une mémoire d'instructions (510, 710) sur la base de l'état dudit signal de hit, l'instruction de branchement imposant une adresse cible de branchement de microcode, et
une RAM (551, 751) configurée pour stocker une pluralité d'instructions de patch, ladite pluralité d'instructions de patch étant à exécuter à la place de la micro-instruction et une première de ladite pluralité d'instructions de patch étant stockée à un endroit dans ladite RAM correspondant à l'adresse cible de branchement de microcode.

2. Appareil selon la revendication 1, **caractérisé en ce que** la ROM de microcodes (505, 705) est connecté fonctionnellement à un convertisseur (212) dans un étage de conversion (200) d'un microprocesseur, et **en ce que** ladite adresse ROM de microcodes correspond à un prochain point d'entrée fourni par ledit convertisseur.

3. Appareil selon la revendication 2, **caractérisé en ce que** le microprocesseur comprend un microprocesseur compatible x86.

4. Appareil selon la revendication 1, **caractérisé en ce que** le champ de patchs (512, 712) comprend une mémoire adressable en contenu (CAM).

5. Appareil selon la revendication 1, **caractérisé en ce que** la pluralité d'entrées comprend 32 entrées et **en ce que** chacune de la pluralité d'entrées comprend une adresse ROM de microcode correspondante et une instruction de patch correspondante.

6. Appareil selon la revendication 1, **caractérisé en ce que** ladite micro-instruction comprend une ou plusieurs instructions de machine spécifiques.

7. Appareil selon la revendication 1, **caractérisé en ce que** ladite micro-instruction comprend un codage d'une pluralité d'instructions de machine spécifiques.

8. Appareil selon la revendication 1, comprenant en outre
un chargeur de patchs (511, 711) fonctionnellement connecté à une mémoire de système (531, 731) et une ROM BIOS (533, 733) et configuré pour récupérer ladite instruction de branchement correspondante et ladite pluralité d'instructions de patch de ladite mémoire de système et pour charger ladite instruction de branchement correspondante dans ledit champ de patchs (512, 712) et ladite pluralité d'instructions de patch dans ladite RAM (533, 733).

9. Appareil selon la revendication 8, **caractérisé en ce que** le chargeur de patchs (511, 711) charge ladite instruction de branchement et ladite pluralité d'instructions de patch à la suite d'une transition d'un signal de remise à zéro du microprocesseur et avant d'exécuter des instructions stockées dans ladite ROM BIOS (533, 733), et **en ce que** ladite instruction de branchement et ladite pluralité d'instructions de patch sont stockées dans ladite ROM BIOS (533, 733).

10. Appareil selon la revendication 8, **caractérisé en ce que** le chargeur de patchs (511, 711) charge ladite instruction de branchement et ladite pluralité d'instructions de patch sur la base de l'exécution d'instructions privilégiées de système de fonctionnement qui sont exécutées sur la base de l'état d'un bit de patch (524, 724) dans une mémoire spécifique de machine (523, 723).

11. Procédé pour produire un patch à microcode d'un à plusieurs, correspondant à une micro-instruction stockée dans une ROM de microcodes, comprenant
dans un étage de conversion (200) d'un microprocesseur, fournir simultanément une adresse ROM de microcode à une ROM de microcodes (505, 705) et à un champ de patchs (512, 712), l'adresse ROM de microcode indexant une séquence de microinstructions stockée dans ladite ROM de microcodes et qui correspond à une macro-instruction,
déterminer que ladite adresse ROM de microcode correspond à une parmi une pluralité d'entrées dans ledit champ de patchs (512, 712), émettre une instruction correspondante de branchement et délivrer un signal de hit, l'instruction de branchement imposant une adresse cible de branchement,
en réponse à l'émission du signal de hit, acheminer l'instruction de branchement correspondante à une mémoire d'instructions (510, 710) pour exécution,
brancher sur un endroit dans une ROM de microcodes (551, 751) qui correspond à l'adresse cible de branchement et ensuite exécuter une ou plusieurs instructions de patch qui sont stockées à l'endroit dans la RAM de microcodes (551, 751).

12. Procédé selon la revendication 11, **caractérisé en ce que** l'adresse ROM de microcode est fournie en réponse à la génération d'un prochain point d'entrée par un convertisseur (212).

13. Procédé selon la revendication 11, **caractérisé en ce que** le champ de patchs (512, 712) comprend une mémoire adressable en contenu (CAM).

14. Procédé selon la revendication 11, **caractérisé en ce que** la pluralité d'entrées comprend 32 entrées et **en ce que** chacune de la pluralité d'entrées comprend une adresse ROM de microcode correspondante et une instruction de patch correspondante.

15. Procédé selon la revendication 11, **caractérisé en ce que** ladite micro-instruction comprend une ou plusieurs instructions de machine spécifiques.

16. Procédé selon la revendication 11, **caractérisé en ce que** ladite micro-instruction comprend un codage d'une pluralité d'instructions de machine spécifiques.

17. Procédé selon la revendication 11, comprenant en outre :
récupérer ladite instruction de branchement et ladite une ou plusieurs instructions de patch de ladite mémoire de système (531, 731) et charger ladite instruction de branchement dans le champ de patch (512, 712) et l'une ou plusieurs instructions de patch dans ladite RAM de microcodes (551, 751).

18. Procédé selon la revendication 11, comprenant en outre :
à la suite de la transition d'un signal de remise à zéro du microprocesseur et avant d'exécuter des instructions stockées dans ladite ROM BIOS (533, 733), récupérer ladite instruction de branchement et ladite une ou plusieurs instructions de patch de la ROM BIOS et charger l'instruction de branchement dans le champ de patchs et l'une ou plusieurs instructions de patch dans ladite RAM de microcodes (551, 751).

19. Procédé selon la revendication 17, **caractérisé en ce que** le chargement est effectué sur la base de l'exécution d'instructions privilégiées de système de fonctionnement qui sont exécutées sur la base de l'état d'un bit de patch (524, 724) dans une mémoire spécifique de machine (523, 723).
